# EUROPÄISCHE PATENTSCHRIFT

(11) **EP 2 434 312 B1**
(45) Veröffentlichungstag und Bekanntmachung des Hinweises auf die Patenterteilung: **16.01.2013**
(21) Anmeldenummer: 10179342.0
(22) Anmeldetag: 24.09.2010
(51) Int. Cl.: G01B 11/24, G01S 17/42, G01S 7/481, G01B 11/26, G01C 15/00

(54) **Laserscanner mit einstückiger Lichtablenkeinheit mit Winkelmaßverkörperung**
Laser scanner with light deflection means and angle indicator in one piece
Lecteur laser avec dispositif de déflexion de lumière avec des moyens de détection de l'écart angulaire en une pièce

(43) Veröffentlichungstag der Anmeldung: 28.03.2012
(73) Patentinhaber: Sick AG, 79183 Waldkirch (DE)
(72) Erfinder: Gosch, Kirsten, 79108 Freiburg (DE); Hanselmann, Gabriel, 79369 Wyhl (DE); Pastor, Sebastian, 79194 Gundelfingen (DE)
(74) Vertreter: Hehl, Ulrich

(56) Entgegenhaltungen:
- EP-A2- 0 457 548
- EP-A2- 0 945 333
- WO-A1-2004/068211
- DE-A1- 3 741 259
- DE-U1- 20 204 491

## Beschreibung

Die Erfindung betrifft einen Laserscanner gemäß dem Oberbegriff von Anspruch 1 mit einer Winkelmesseinheit, mittels derer die Winkelstellung einer Ablenkeinheit erfassbar ist, sowie ein Verfahren zur Herstellung des Laserscanners.

Laserscanner werden in vielen Anwendungen zur Objekterfassung eingesetzt, um die Positionen von Objekten zu ermitteln oder deren Kontur zu bestimmen. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

Mit den Winkel- und Entfernungsangaben ist der Ort eines Objektes in dem Überwachungsbereich in zweidimensionalen Polarkoordinaten erfasst. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

In den meisten herkömmlichen Laserscannern dient als Ablenkeinheit ein flacher Drehspiegel, mit dessen Hilfe die Scanebene in diskreten Winkelschritten abgetastet wird. Damit der Laserscanner den Winkel kennt, unter dem ein Objekt angetastet wird, sind Encoder zur Winkel- beziehungsweise Drehzahlmessung des Drehspiegels oder des den Drehspiegel antreibenden Motors vorgesehen. Diese Encoder weisen beispielsweise eine Strichscheibe aus geätztem Metall oder mit Laser bearbeiteten Kunststoffen auf. Während der Drehbewegung durchstreifen die Markierungen der Strichscheibe eine Gabellichtschranke und erzeugen so ein Signal, welches der Auswertung der Winkel- beziehungsweise Drehzahlinformation dient.

Solche Strichscheiben bilden ein zusätzliches Bauteil, das einem gesonderten Herstellungsprozess unterliegt. Dadurch erhöhen sich die Kosten für Herstellung und Montage eines Laserscanners. Ein weiterer Nachteil der Strichscheibe liegt darin, dass sich die Verbindung zwischen Motor mit der daran montierten Strichscheibe und dem Drehspiegel lösen kann. Dann entsteht ein Schlupf zwischen der sich weiter mit dem Motor drehenden Strichscheibe und dem Drehspiegel mit dem Ergebnis, dass der Encoder eine Drehbewegung misst, die gar nicht der scannenden Ablenkung des Drehspiegels entspricht. Dies ist nicht nur ein Problem der Messgenauigkeit. Die Spiegeldrehung wird häufig auch überwacht, um den Laserschutz zu gewährleisten. In Sicherheitslaserscannern ist eine unsichere Information über die Winkelstellung erst recht nicht tolerierbar. Es müssen deshalb aufwändige besondere Maßnahmen getroffen werden, damit die Drehbewegungen von Strichscheibe und Drehspiegel übereinstimmen oder ein möglicher Schlupf zumindest erkannt wird.

In der EP 0 457 548 A2 wird ein computergestütztes Positionierungssystem beschrieben. Dabei werden drei Retroreflektoren an bekannten Koordinaten eines zweidimensionalen Bezugssystems angebracht und von einem rotierenden Laserstrahl abgetastet. Mit Hilfe einer Codescheibe wird die jeweilige Winkelstellung bestimmt.

Die DE 37 41 259 A1 befasst sich mit der autonomen Steuerung eines Fahrzeugs, das sich anhand eines Laserentfernungsmessers orientiert. Der Entfernungsmesser wird als Ganzes um seine Hochachse gedreht. Dabei wird der Winkel des jeweils ausgesandten Messstrahls mit einem Winkelencoder gemessen.

Aus der DE 202 04 491 U1 ist eine weitere Laserabstandsermittlungsvorrichtung bekannt, bei der ein Umlenkspiegel mit Hilfe eines Motors gedreht wird, um den Messbereich fächerartig zu durchstrahlen. Mit dem Umlenkspiegel ist ein Winkelgeber verbunden, aus dessen elektrischem Signal abgeleitet wird, in welcher Winkelstellung sich der Winkelgeber jeweils befindet.

Die EP 0 945 333 A2 offenbart eine Vorrichtung zum Vermessen eines Zweiradrahmens. Ungefähr auf Höhe des Sattels wird zentriert ein Lasergerät angebracht und zu dessen beiden Seiten etwas nach unten versetzt jeweils ein Reflektor. Ein weiterer Reflektor wird vorne an der Lenkachse angebracht und ist mit der Lenkachse oder gegen die Lenkachse verschwenkbar. Der letztgenannte Reflektor ist dazu auf einem Aufsatzteil verdrehbar, das eine Skala zur Angabe der Drehstellung aufweist. Alternativ zu einer Skala können elektrische Drehgeber mit einer Rastung bis 35° verwendet werden. Durch Dreiecksvermessung können mit dieser Vorrichtung diverse Rahmenabmessungen bestimmt werden.

Aus der WO2004/068211 A1 ist ein 3D-Scanner mit einem Rotor bekannt, der sich um eine erste Achse und eine zweite Achse dreht. In einer Ausführungsform ist vorgesehen, eine Markierung unmittelbar auf dem Rotor aufzubringen oder als Ring auf den Rotor aufzustecken. Diese Markierung wirkt mit einem gerätefesten Sensor zusammen, um die jeweilige Drehstellung des Rotors zu erkennen.

Als Alternative zu einer optisch abgetasteten Strichscheibe sind in den Motor integrierte Hallsensoren bekannt. Dabei ist aber die Absolutbestimmung des Winkels zumindest schwierig, und die Messgenauigkeit wird besonders bei Temperaturschwankungen problematisch.

Es ist deshalb Aufgabe der Erfindung, eine einfache und sichere Winkelüberwachung in einem Laserscanner zu erreichen.

Diese Aufgabe wird durch einen Laserscanner gemäß Anspruch 1 und ein Herstellungsverfahren für den Laserscanner gemäß Anspruch 12 gelöst. Dabei geht die Erfindung von dem Grundgedanken aus, die Winkelstellung wie üblich durch eine Winkelmesseinheit zu erfassen. Dabei wird dann eine unauflösbare Kopplung zwischen Winkelmaßverkörperung und Ablenkeinheit geschaffen, indem diese beiden Elemente einstückig ausgebildet werden. Mit einstückig ist erst einmal im weiteren Sinne gemeint, dass die Winkelmaßverkörperung schon vor der eigentlichen Montage des Laserscanners ohne Bewegungsspielraum mit der Ablenkeinheit mindestens mittelbar fest verbunden wird. Im engeren Sinne einstückig bedeutet, dass Winkelmaßverkörperung und Ablenkeinheit nicht als solche nachträglich miteinander verbunden oder verklebt werden, sondern insgesamt ein Teil bilden, beispielsweise in ein und demselben Fertigungsprozess gemeinsam beziehungsweise integral entstehen. Dabei sind jeweils auch Fälle erfasst, in denen eine Halterung oder ein Sockel der Ablenkeinheit mit der Maßverkörperung einstückig verbunden ist, wobei diese Halterung das eigentlich optisch aktive Ablenkelement trägt, wie einen Spiegel.

Die Erfindung hat den Vorteil, dass schon per Design eine sicher mit der Ablenkeinheit gekoppelte Gewinnung der Drehzahl- und Winkelinformation ermöglicht ist. Die Verbindung der Ablenkeinheit mit der Winkelmaßverkörperung führt zugleich zu einer deutlichen Kostenersparnis, da nur ein Teil gefertigt werden muss und nur ein Prozessschritt erforderlich ist, mit dem Ablenkeinheit und Maßverkörperung auf dem Motor befestigt werden. Durch die einstückige Ausführung ist eine getrennte Rotation der Maßverkörperung bei blockierter Ablenkeinheit nicht mehr möglich, so dass eine besondere Überwachung eines Schlupfes oder weitere konstruktive Schritte zu dessen Vermeidung entfallen. Schließlich wird eine besonders kompakte Bauform erreicht, weil keine Befestigungsflächen der Maßverkörperung zum Motor oder der Ablenkeinheit vorgesehen werden müssen.

Die Winkelmaßverkörperung weist bevorzugt eine Codescheibe auf, insbesondere eine Strichscheibe oder ein Zahnrad. Die Codescheibe wird mit einer zentralen Öffnung für die Welle des Drehmotors versehen. Striche oder Zähne in meist regelmäßigen Abständen bilden die Codemarkierungen für einen Winkel. Sie können mit einfachen Sensoren optisch erfasst werden.

Die Winkelmaßverkörperung weist bevorzugt Codemarkierungen mit einer Winkelauflösung von einigen Grad auf. Gerade bei einem Zahnrad ist je nach Herstellungsverfahren, beispielsweise bei Spritzgusstechnik, die leicht herstellbare Winkelauflösung auf einige Grad, also etwa 1 °-5° begrenzt, wobei auch größere Abstände von beispielsweise 8° oder 10° denkbar sind. Andere Herstellungsverfahren lassen auch eine feinere Winkelauflösung zu.

Die Winkelmesseinheit ist besonders bevorzugt dafür ausgebildet, die Winkelstellung aus mehreren Abtastungen einer Codemarkierung zu interpolieren oder zu mitteln. Eine Interpolation, die beispielsweise von einer gleichmäßigen Drehbewegung ausgeht, ermöglicht genaue Winkelmessungen auch bei relativ groben Abständen der Codemarkierungen. Durch Mittelung aus mehreren hintereinander erfassten Codemarkierungen können Fertigungstoleranzen der Winkelmaßverkörperung ausgeglichen werden.

Die Winkelmaßverkörperung weist bevorzugt eine oder mehrere konzentrische Codespuren auf. Als Codespur werden mehrere zusammengehörige Codemarkierungen bezeichnet, die insgesamt eine Winkelskala über den gewünschten Messbereich bilden. Mit einer einzelnen Codespur lässt sich besonders einfach eine inkrementelle Codierung umsetzen, in der also die Winkelmesseinheit nur relative Winkeländerungen beispielsweise anhand der Anzahl der überstrichenen Codemarkierungen bestimmt. Absolute Winkel werden daraus mit Hilfe eines Anfangswerts errechnet. Eine echte Absolutmessung erfordert, dass jede Codemarkierung die volle Information über die Winkelstellung enthält. Dazu sind vorzugsweise mehrere Codespuren mit einem entsprechend mächtigeren Code vorgesehen, wobei dann auch die Winkelmesseinheit eine entsprechende Anzahl von Abtastköpfen aufweist.

Die Ablenkeinheit und die Winkelmaßverkörperung sind bevorzugt als Kunststoffteil, insbesondere als Spritzgussteil ausgebildet. Sie bilden dann von vorne herein ein einziges Element aus einem einheitlichen Fertigungsprozess. Dies erleichtert und verbilligt die Herstellung und Montage.

Die Ablenkeinheit weist bevorzugt einen Sockel mit einem Hohlraum zum Aufstecken auf die Welle oder den Rotor eines Motors auf. Dieser Sockel umgibt die Welle oder den Rotor insgesamt oder nur in Teilwinkelbereichen, beispielsweise mit wenigen bogenförmigen Beinen oder mehreren dünnen Beinen.

Die Maßverkörperung ist bevorzugt am Außenumfang des Sockels angeordnet. Speziell bildet sie einen Zahnkranz um den Sockel. So wird das einstückige gemeinsame Bauteil besonders einfach herstellbar.

Die Ablenkeinheit ist bevorzugt als Drehspiegel ausgebildet. Das ist die häufigste Spiegelform in einem Laserscanner, um einen großen Winkelbereich zu erfassen. Andere Ablenkungen, etwa mit einem Polygonspiegelrad, sind denkbar. Die Ablenkeinheit weist besonders bevorzugt eine schräg zu der Drehachse ausgerichtete Spiegelfläche auf. Ein solcher flacher Drehspiegel steht dann beispielsweise im 45°-Winkel zu Sender und Empfänger, um eine Ebene senkrecht zu der Drehachse abzutasten. Es sind alternativ auch konturierte Spiegel bekannt, beispielsweise hyperbolische, die dann zusätzliche Eigenschaften einer Sende- oder Empfangsoptik haben.

Der Laserscanner weist bevorzugt eine Gabellichtschranke zum Abtasten der Winkelmaßverkörperung auf. Das ist ein einfacher, kostengünstiger Sensor zur Erfassung der Winkelinformation, der bei einer Strichscheibe oder einem Zahnkranz die Übergänge zwischen Hell und Dunkel zählt. Die Gabellichtschranke kann als Einweg- oder Reflexionslichtschranke ausgebildet sein.

Vorzugsweise weist der Laserscanner eine Entfernungsmesseinheit auf, die dafür ausgebildet ist, die Entfernung zu einem angetasteten Objekt aus der Lichtlaufzeit zwischen Aussenden des Sendelichtstrahls und Empfangen des Empfangslichtstrahls zu bestimmen. Die Entfernungseinheit arbeitet beispielsweise mit einem Puls- oder Phasenverfahren. Daneben kann auch eine Mehrpulsauswertung implementiert sein, bei der je Messpunkt eine ganze Reihe von Lichtpulsen ausgesandt und aus dem Empfangssignal durch Mittelung oder Regression ein Wert für die Lichtlaufzeit berechnet wird. Zusätzlich zu dem Winkel wird somit auch eine Abstandsinformation gewonnen, so dass zweidimensionale Polarkoordinaten des angetasteten Objektpunkts verfügbar sind. Daraus können je nach Anwendung Objektpositionen und/oder Objektkonturen bestimmt werden.

Der Laserscanner ist bevorzugt als Sicherheitslaserscanner ausgebildet und weist eine Absicherungseinheit und einen sicheren Ausgang auf, wobei die Absicherungseinheit dafür ausgebildet ist, unzulässige Objekteingriffe in Schutzbereiche innerhalb des Überwachungsbereichs zu erkennen und daraufhin ein Absicherungssignal über den sicheren Ausgang auszugeben. Damit wird die in der Sicherheitstechnik typische Anwendung der Schutzfeldüberwachung zur Absicherung eines Gefahrenbereichs ermöglicht. Ein solcher Sicherheitsscanner erfüllt üblicherweise in sämtlichen funktional relevanten Elementen die einleitend beschriebenen Sicherheitsanforderungen.

Bei dem erfindungsgemäßen Herstellungsverfahren wird die drehbare Ablenkeinheit mit der Winkelmaßverkörperung einstückig hergestellt und als ein gemeinsames Bauteil auf einer Welle oder einem Rotor eines Motors angeordnet. Damit entfällt ein Herstellungs- und Montageschritt.

Besonders vorteilhaft ist, wenn dabei die Ablenkeinheit und die Winkelmaßverkörperung in einem Spritzgussverfahren als gemeinsames Kunststoffteil hergestellt werden. Dies ist ein kostengünstiges Verfahren, mit dem dennoch die gewünschten Eigenschaften des einstückigen Bauteils präzise erzielt werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Schnittdarstellung durch eine Ausführungsform eines erfindungsgemäßen Laserscanners;
- Fig. 2a: eine dreidimensionale Ansicht der einstückig mit einer Winkelmaßverkörperung ausgebildeten Ablenkeinheit des Laserscanners gemäß Figur 1;
- Fig. 2b: eine Ansicht gemäß Figur 2a, bei dem die Ablenkeinheit mit der Winkelmaßverkörperung auf dem Kopf steht; und
- Fig. 3: eine dreidimensionale Ansicht der auf einen Rotor eines Antriebsmotors montierten Ablenkeinheit samt Winkelmaßverkörperung gemäß Figur 2 sowie einer die Winkelmaßverkörperung abtastenden Gabellichtschranke.

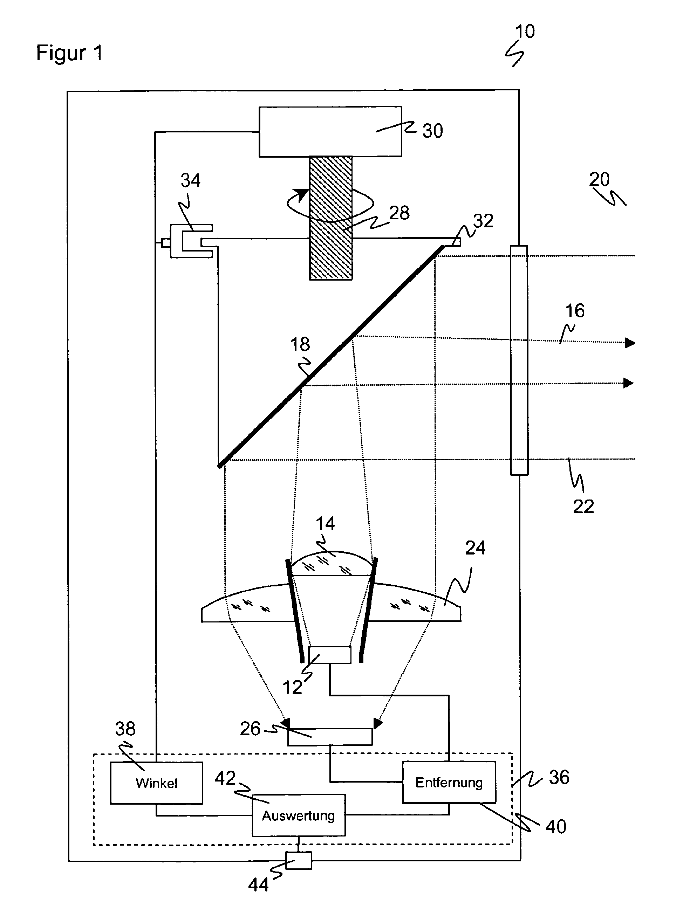

Fig. 1 zeigt eine schematische Schnittdarstellung durch einen erfindungsgemäßen Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt und dort von einem gegebenenfalls vorhandenen Objekt remittiert. Das remittierte Licht 22 gelangt wieder zu dem Laserscanner 10 zurück und wird dort über die Ablenkeinheit 18 mittels einer Empfangsoptik 24 von einem Lichtempfänger 26 detektiert, beispielsweise einer Photodiode.

Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative Lösungen, etwa mit einem eigenen Spiegelbereich für den Sendelichtstrahl 16 oder mit Teilerspiegeln.

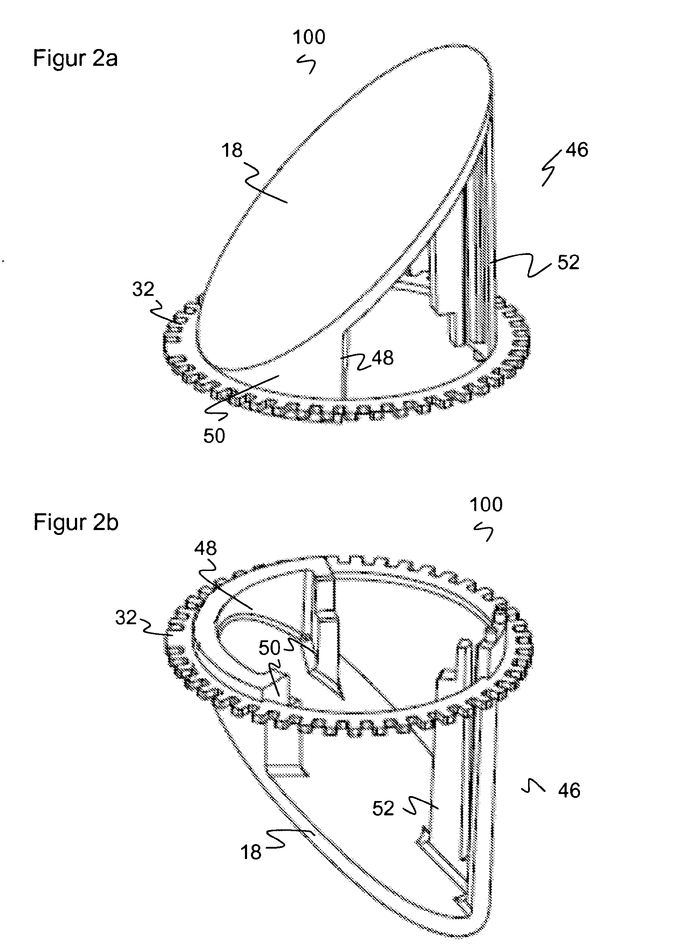

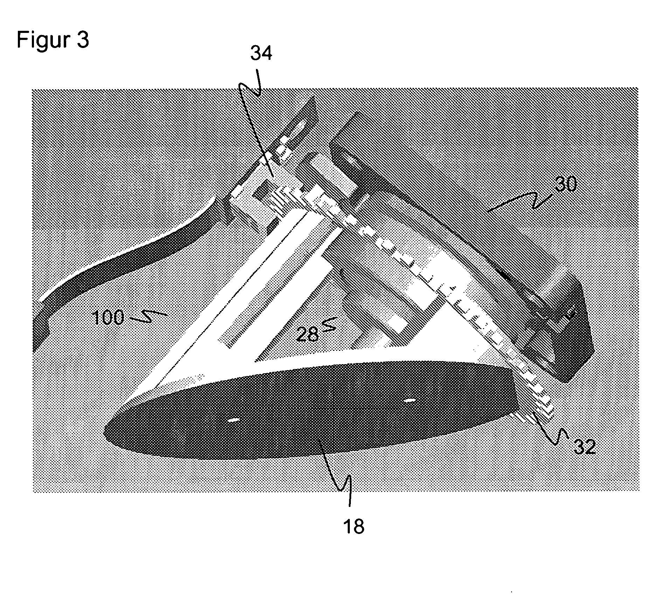

Die Ablenkeinheit 18 ist auf einem Rotor 28, alternativ auf der Welle eines Motors 30 montiert, der sie in eine kontinuierliche Drehbewegung versetzt. Am Außenumfang der Ablenkeinheit 18 ist eine Winkelmaßverkörperung 32 beispielsweise in Form einer Codescheibe einstückig mit der Ablenkeinheit 18 ausgebildet. Ein Encodersensor 34 tastet die Winkelmaßverkörperung 32 ab, um die jeweilige Winkelstellung der Ablenkeinheit 18 zu erfassen. Das gemeinsame Bauteil 100 aus Ablenkeinheit 18 und Winkelmaßverkörperung 32 sowie die Winkelbestimmung wird weiter unten anhand der Figuren 2 und 3 näher erläutert.

Eine Auswertungseinheit 36 ist mit dem Lichtsender 12, dem Lichtempfänger 26, dem Motor 30 und dem Encodersensor 34 verbunden. Die Auswertungseinheit 36 ist beispielhaft in drei Funktionsblöcke unterteilt, wobei diese Funktionsblöcke auch anders aufgeteilt und zumindest teilweise außerhalb des Laserscanners realisiert sein können.

Der von dem Lichtsender 12 erzeugte Sendelichtstrahl 16 tastet den durch die Rotationsbewegung der Ablenkeinheit 18 entstehenden Überwachungsbereich 20 ab. Wird von dem Lichtempfänger 26 remittiertes Licht 22 aus dem Überwachungsbereich 20 empfangen, so erkennt zunächst ein Winkelauswertungsblock 38 mit Hilfe der Daten des Encodersensors 34 den Winkel, unter dem ein Objekt angetastet wird.

Zusätzlich wird in einem Entfernungsauswertungsblock 40 die Laufzeit zwischen Aussenden des Sendelichtstrahls 14 und Empfangen von remittiertem Licht 22 beispielsweise mit einem Pulslaufzeitverfahren, einem Phasenverfahren oder einem Mehrpulsverfahren ermittelt. Aus der Lichtlaufzeit wird unter Verwendung der Lichtgeschwindigkeit auf die Entfernung des angetasteten Objektes von dem Laserscanner 10 geschlossen.

Somit stehen nach jeweils einer Umdrehung der Ablenkeinheit 18 über den Winkel und die Entfernung zweidimensionale Polarkoordinaten aller Objektpunkte in dem Überwachungsbereich 20 zur Verfügung. Daraus können in einem Objekterfassungsblock 42 Positionen oder Konturen der Objekte in dem Überwachungsbereich 20 bestimmt werden. Ist der Laserscanner 10 speziell als Sicherheitslaserscanner ausgebildet, so erfolgt eine Schutzfeldauswertung, mit der festgestellt wird, ob sich ein unzulässiges Objekt in einem Schutzfeld befindet.

Das Ergebnis der Objekterfassung wird über einen Ausgang 44 ausgegeben. Je nach Ausführungsform des Laserscanners 44 handelt es sich dabei beispielsweise um Rohdaten der Gabellichtschranke und des Empfangselements, fertige Objektpositionen und -konturen oder ein binäres Objektfeststellungssignal. Bei einem Sicherheitslaserscanner ist die Ausgabe ein sicherheitsgerichtetes Abschaltsignal an dem Ausgang 44, der dafür sicher ausgebildet ist, etwa durch regelmäßige Tests oder Zweikanaligkeit (OSSD, Output Signal Switching Device).

Figur 2 zeigt das gemeinsame Bauteil 100 der Ablenkeinheit 18 und der Winkelmaßverkörperung 32 in einer dreidimensionalen Ansicht, wobei in Figur 2a die Spiegelfläche nach oben und in Figur 2b nach unten gerichtet ist. Hier und im Folgenden bezeichnen gleiche Bezugszeichen die gleichen Merkmale. Die Ablenkeinheit 18 und die Winkelmaßverkörperung 32 sind miteinander einstückig als gemeinsames Kunststoffteil kombiniert. Für die Herstellung eignet sich ein kostengünstiges Spritzgussverfahren. Die genauere dargestellte mechanische Ausgestaltung des Bauteils 100 ist nur beispielhaft zu verstehen.

Als Ablenkeinheit 18 fungiert ein flacher Drehspiegel. Dessen Sockel 46 besteht aus zwei kurzen Beinen 48 mit einem etwa 120° umfassenden umlaufenden Verbindungsbereich 50 an der tiefsten Neigungsstelle und einem nur einige Grad umfassenden langen Bein 52 an der gegenüberliegenden höchsten Neigungsstelle des Drehspiegels. Dadurch entsteht ein Dreibein, in dessen Innenraum der Rotor 28 passt, damit das Bauteil 100 auf dem Motor 30 montiert werden kann.

Die Winkelmaßverkörperung 32 in Form eines Zahnrads ist am Außenumfang der Beine 50, 52 angespritzt. Die Winkelauflösung zwischen zwei Zähnen beträgt etwa 8°. Zur Verfeinerung der Winkelmessung können in dem Winkelauswertungsblock 38 über Interpolation Zwischenwerte gewonnen werden. Ebenso sind Mittelungsverfahren über mehrere Schritte zum Ausgleich von Fertigungstoleranzen des Spritzgussteils 100 denkbar.

Figur 3 zeigt eine dreidimensionale Ansicht der Montage des gemeinsames Bauteils 100 auf dem Rotor 28 des Motors 30. Der Encodersensor 34 sitzt in Form einer Gabellichtschranke über dem Rand der Winkelmaßverkörperung 32 und erkennt den Wechsel von Zahn und Lücke, um die Winkelstellung zu messen. Die Montage von Winkelmaßverkörperung 32 und Ablenkeinheit 18 erfordert nur einen einzigen Arbeitsschritt, und wegen der einstückigen Ausbildung des gemeinsamen Bauteils 100 sind gegenseitige Dejustierungen oder ein Schlupf von vorneherein ausgeschlossen.

## Patentansprüche

1. Laserscanner (10) zur Erfassung von Objekten in einem Überwachungsbereich (20) mit einem Lichtsender (12) zum Aussenden eines Sendelichtstrahls (16), einer drehbaren Ablenkeinheit (18) zur periodischen Ablenkung des Sendelichtstrahls (16) in den Überwachungsbereich (20), einem Motor (30), um die Ablenkeinheit (18) in eine kontinuierliche Drehbewegung zu versetzen, einem Lichtempfänger (26) zum Erzeugen eines Empfangssignals aus dem von Objekten in dem Überwachungsbereich (20) remittierten Lichtstrahl (22) sowie einer Winkelmesseinheit (32, 34, 38), mittels derer die Winkelstellung der Ablenkeinheit (18) erfassbar ist und die eine Winkelmaßverkörperung (32) aufweist,
**dadurch gekennzeichnet,**
**dass** die Winkelmaßverkörperung eine Strichscheibe oder ein Zahnrad aufweist und mit der Ablenkeinheit (18) als gemeinsames Spritzgussteil einstückig ausgebildet ist, dass der Laserscanner (10) eine Gabellichtschranke (34) zum Abtasten der Winkelmaßverkörperung (32) aufweist und dass die Ablenkeinheit (18) einen Sockel (46) mit einem Hohlraum zum Aufstecken auf den Rotor (28) oder die Welle eines Motors (30) aufweist.

2. Laserscanner (10) nach Anspruch 1,
wobei die Winkelmaßverkörperung (32) Codemarkierungen mit einer Winkelauflösung von einigen Grad aufweist, und wobei die Winkelmesseinheit (38) dafür ausgebildet ist, die Winkelstellung aus mehreren Abtastungen einer Codemarkierung zu interpolieren oder zu mitteln.

3. Laserscanner (10) nach Anspruch 1 oder 2,
wobei die Winkelmaßverkörperung (32) eine oder mehrere konzentrische Codespuren aufweist.

4. Laserscanner (10) nach einem der vorhergehenden Ansprüche,
wobei die Maßverkörperung (32) am Außenumfang des Sockels (46) angeordnet ist.

5. Laserscanner (10) nach einem der vorhergehenden Ansprüche,
wobei die Ablenkeinheit (18) als Drehspiegel ausgebildet ist und insbesondere eine schräg zu der Drehachse ausgerichtete Spiegelfläche aufweist.

6. Laserscanner (10) nach einem der vorhergehenden Ansprüche,
der eine Entfernungsmesseinheit (36, 40) aufweist, die dafür ausgebildet ist, die Entfernung zu einem angetasteten Objekt aus der Lichtlaufzeit zwischen Aussenden des Sendelichtstrahls (16) und Empfangen des Empfangslichtstrahls (22) zu bestimmen.

7. Laserscanner (10) nach einem der vorhergehenden Ansprüche,
der als Sicherheitslaserscanner ausgebildet ist und eine Absicherungseinheit (36, 42) und einen sicheren Ausgang (44) aufweist, wobei die Absicherungseinheit (36, 42) dafür ausgebildet ist, unzulässige Objekteingriffe in Schutzbereiche innerhalb des Überwachungsbereichs (20) zu erkennen und daraufhin ein Absicherungssignal über den sicheren Ausgang (44) auszugeben.

## Claims

1. Laser scanner (10) for the detection of objects in a monitoring area (20) having a light transmitter (12) for transmitting a transmission light beam (16), a rotatable deflection unit (18) for periodically deflecting the transmission light beam (16) in the monitoring area (20), a motor (30) for causing a continuous rotational movement of the deflection unit (18), a light receiver (26) for generating a reception signal from the remitted light beam (22) remitted by objects in the monitoring area (20), and an angle encoder unit (32, 34, 38) for detecting the angular position of the deflection unit (18) having an angular scale (32),
**characterized in that**
the angular scale comprises a scaled disk or a toothed wheel and is formed integrally with the deflection unit (18) as a common injection-molded part, **in that** the laser scanner (10) comprises a forked light barrier (34) for scanning the angular scale (32), and **in that** the deflection unit (18) comprises a base (46) having a cavity for mounting on the rotor (28) or the shaft of a motor (30).

2. Laser scanner (10) according to claim 1,
wherein the angular scale (32) comprises code marks with an angular resolution of a few degrees, and wherein the angular encoder unit (38) is configured to interpolate or to average the angular position from multiple detections of a code mark.

3. Laser scanner (10) according to claim 1 or 2,
wherein the angular scale (32) comprises one or multiple concentric code tracks.

4. Laser scanner (10) according to one of the preceding claims,
wherein the angular scale (32) is arranged on an outer circumference of the base (46).

5. Laser scanner (10) according to one of the preceding claims,
wherein the deflection unit (18) is configured as a rotating mirror and in particular comprises a mirror surface oriented obliquely to the rotation axis.

6. Laser scanner (10) according to one of the preceding claims,
comprising a distance measuring unit (36, 40) which is configured to determine the distance to a detected object from a light time of flight between transmission of the transmission light beam (16) and reception of the reception light beam (22).

7. Laser scanner (10) according to one of the preceding claims,
the laser scanner (10) being configured as a safety laser scanner and comprising a protection unit (36, 42) and a safe output (44), wherein the protection unit (36, 42) is configured to detect forbidden object intrusions into protected areas within the monitored area (20) and to subsequently output a protection signal via the safe output (44).

## Revendications

1. Scanner à laser (10) pour la détection d'objets dans une zone de surveillance (20) comprenant un émetteur de lumière (12) pour émettre un rayon de lumière émise (16), une unité de déflexion rotative (18) pour défléchir périodiquement le rayon de lumière émise (16) vers la zone de surveillance (20), un moteur (30) afin de de mettre l'unité de déflexion (18) dans un mouvement rotatif continu, un récepteur de lumière (26) pour engendrer un signal reçu à partir du rayon de lumière (22) réémis par des objets dans la zone de surveillance (20), ainsi qu'une unité de mesure angulaire (32, 34, 38), au moyen de laquelle la position angulaire de l'unité de déflexion (18) peut être détectée et qui comprend une matérialisation dimensionnelle angulaire (32),
**caractérisé en ce que**
la matérialisation dimensionnelle angulaire comprend un disque doté de traits ou une roue dentée et est réalisé d'une seule pièce avec l'unité de déflexion (18) sous la forme d'une pièce commune coulée par injection, **en ce que** le scanner à laser (10) comprend une barrière lumineuse en fourche (34) pour palper la matérialisation dimensionnelle angulaire (32), et **en ce que** l'unité de déflexion (18) comprend un socle (46) avec une cavité pour venir la coiffer sur le rotor (28) ou sur l'arbre d'un moteur (30).

2. Scanner à laser (10) selon la revendication 1,
dans lequel la matérialisation dimensionnelle angulaire (32) comprend des marques codées avec une résolution angulaire de quelques degrés, et l'unité de mesure angulaire (38) est réalisée pour interpoler ou pour moyenner la position angulaire à partir de plusieurs palpages d'une marque codée.

3. Scanner à laser (10) selon la revendication 1 ou 2,
dans lequel la matérialisation dimensionnelle angulaire (32) comprend une ou plusieurs pistes codées concentriques.

4. Scanner à laser (10) selon l'une des revendications précédentes, dans lequel la matérialisation dimensionnelle angulaire (32) est agencée à la périphérie extérieure du socle (46).

5. Scanner à laser (10) selon l'une des revendications précédentes, dans lequel l'unité de déflexion (18) est réalisée sous forme de miroir tournant et comporte en particulier une surface spécularisée orientée en oblique par rapport à l'axe de rotation.

6. Scanner à laser (10) selon l'une des revendications précédentes, qui comprend une unité de mesure d'éloignement (36, 40) qui est réalisée pour déterminer l'éloignement d'un objet palper à partir du temps de parcours de la lumière entre l'émission du rayon de lumière émise (16) et la réception du rayon de lumière reçue (22).

7. Scanner à laser (10) selon l'une des revendications précédentes, qui est réalisé sous forme de scanner à laser de sécurité et qui comprend une unité de sécurisation (36, 42) et une sortie de sécurité (44), dans lequel l'unité de sécurisation (36, 42) est réalisée pour reconnaître des interventions inadmissibles d'objets dans des zones protégées à l'intérieur de la zone de surveillance (20) et pour délivrer ensuite un signal de sécurisation via la sortie de sécurité (44).
